# EUROPEAN PATENT APPLICATION

(11) **EP 3 328 062 A1**
(43) Date of publication of application: **30.05.2018**
(21) Application number: 17160519.9
(22) Date of filing: 13.03.2017
(51) Int. Cl.: H04N 5/232

(54) **PHOTO SYNTHESIZING METHOD AND DEVICE**

(30) Priority: 29.11.2016 CN 201611078279
(71) Applicant: Beijing Xiaomi Mobile Software Co., Ltd., Beijing 100085 (CN)
(72) Inventor: DU, Hui, Beijing 100085 (CN); ZHANG, Haipo, Beijing 100085 (CN); LI, Hongming, Beijing 100085 (CN)
(74) Representative: dompatent von Kreisler Selting Werner - Partnerschaft von Patent- und Rechtsanwälten mbB

(57) **Abstract**

The present disclosure relates to a photo synthesizing method and device. The method includes: starting (101, 201) an image acquisition component to acquire a photo after receiving an instruction of generating a synthesized photo; when acquiring a current photo, calculating (102, 202) an expression score value of a first type of face in the current photo; determining (103, 203) whether the expression score value of each and every first type of face is greater than the preset score threshold value in the current photo; and when all the expression score values of the first type of face in the current photo are greater than the preset score threshold value, controlling the image acquisition component to stop acquiring the photo, and generating the synthesized photo by stitching a second type of face in the acquired photos (104, 204).

## Description

### TECHNICAL FIELD

The present disclosure generally relates to the technical field of smart photographing technology, and more particularly, to a photo synthesizing method and device.

### BACKGROUND

With the development of photographing technology, more and more users like to record their photos in their daily travels or friends' gatherings. It is relatively difficult to take a photo with good facial expressions of each person. In the related art, the image capturing apparatus can grade faces in each photo generated when taking photos of multiple people by performing a group-photo preferred operation, and extract the best-performing face of each of the photos for synthesis. In the related art, there are many photos to be synthesized when generating the synthesized photo, which increases the power consumption of the image capturing apparatus and the time of generating the synthesized photo.

### SUMMARY

In order to solve the problems existing in the related art, embodiments of the present disclosure provide a photo synthesizing method and device for solving the problem of large power consumption and long time for generating the synthesized photo.

According to a first aspect of embodiments of the present disclosure, there is provided a photo synthesizing method, which may include:
starting an image acquisition component to acquire a photo after receiving an instruction of generating a synthesized photo;
when acquiring a current photo, calculating an expression score value of a first type of face in the current photo, the first type of face being used for indicating a face with the expression score value, which has been calculated by a photo acquired before the current photo, not greater than a preset score threshold value;
determining whether the expression score value of each and every first type of face is greater than the preset score threshold value in the current photo; and
when all the expression score values of the first type of face in the current photo are greater than the preset score threshold value, controlling the image acquisition component to stop acquiring the photo, and generating the synthesized photo by stitching a second type of face in the acquired photos, the second type of face being used for indicating a face with the expression score value greater than the preset score threshold value.

In an embodiment, the method further includes:
when not all the expression score values of the first type of face in the current photo are greater than the preset score threshold value, determining whether the number of the acquired photos is less than a preset number; and
when the number of the acquired photos is less than the preset number, determining a first type of face needing calculation of the expression score value in a photo acquired later based on the expression score value of the first type of face in the current photo, and performing an operation of starting the image acquisition component to acquire the photo.

In an embodiment, the method further includes:
when the number of the acquired photos is not less than a preset number, determining faces for generating the synthesized photo from the acquired photos and generating the synthesized photo by a stitching manner.

In an embodiment, the determining the faces for generating the synthesized photo from the acquired photos includes:
selecting the second type of face from the acquired photos and a face having the highest expression score value among the first type of face as the face for generating the synthesized photo.

In an embodiment, the calculating the expression score value of the first type of face in the current photo includes:
identifying each first type of face from the current photo;
calculating a local score value corresponding to a local feature corresponding to each of the first type of face; and
weighting each local score value of each of the first type of face to obtain the expression score value of each of the first type of face.

According to a second aspect of embodiments of the present disclosure, there is provided a photo synthesizing device, which may include:
an acquisition module configured to start an image acquisition component to acquire a photo after receiving an instruction of generating a synthesized photo;
a calculation module configured to, when acquiring a current photo, calculate an expression score value of a first type of face in the current photo, the first type of face being used for indicating a face with the expression score value, which has been calculated by a photo acquired before the current photo, not greater than a preset score threshold value;
a first determination module configured to determine whether the expression score value of each and every first type of face calculated by the calculation module is greater than the preset score threshold value in the current photo; and
a generation module configured to, when the first determination module determines that all the expression score values of the first type of face in the current photo are greater than the preset score threshold value, control the image acquisition component to stop acquiring the photo, and generate the synthesized photo by stitching a second type of face in the acquired photos, the second type of face being used for indicating a face with the expression score value greater than the preset score threshold value.

In an embodiment, the device further includes:
a second determination module configured to, when the first determination module determines that not all the expression score values of the first type of face in the current photo are greater than the preset score threshold value, determine whether the number of the acquired photos is less than a preset number; and
a performance module configured to, when the second determination module determines that the number of the acquired photos is less than the preset number, determine the first type of face needing calculation of the expression score value in a photo acquired later based on the expression score value of the first type of face in the current photo, and perform an operation of starting the image acquisition component to acquire the photo.

In an embodiment, the device further includes:
a third determination module configured to, when the second determination module determines that the number of the acquired photos is not less than a preset number, determine faces for generating the synthesized photo from the acquired photos and generate the synthesized photo by a stitching manner.

In an embodiment, the third determination module includes:
a selection submodule configured to select the second type of face from the acquired photos and a face having the highest expression score value among the first type of face as the faces for generating the synthesized photo.

In an embodiment, the calculation module includes:
an identification submodule configured to identify each first type of face from the current photo;
a calculation submodule configured to calculate a local score value corresponding to a local feature corresponding to each of the first type of face; and
a weighting submodule configured to weight each local score value of each of the first type of face to obtain the expression score value of each of the first type of face.

According to a third aspect of embodiments of the present disclosure, there is provided a photo synthesizing device, which may include:
a processor; and
a memory for storing instructions executable by the processor;
wherein the processor is configured to:
start an image acquisition component to acquire a photo after receiving an instruction of generating a synthesized photo;
when acquiring a current photo, calculate an expression score value of a first type of face in the current photo, the first type of face being used for indicating a face with the expression score value, which has been calculated by a photo acquired before the current photo, not greater than a preset score threshold value;
determine whether the expression score value of each and every first type of face is greater than the preset score threshold value in the current photo; and
when all the expression score values of the first type of face in the current photo are greater than the preset score threshold value, control the image acquisition component to stop acquiring the photo, and generate the synthesized photo by stitching a second type of face in the acquired photos, the second type of face being used for indicating a face with the expression score value greater than the preset score threshold value.

The present invention also provides a computer program, which when executing on a processor of a terminal, performs the above method.

The technical solutions provided by embodiments of the present disclosure may have the following beneficial effects: upon receiving the instruction of generating the synthesized photo, the image acquisition component is started to acquire the photo, and every time when one photo is acquired, the expression score value of the first type of face in the current photo is calculated, then it is determined whether the expression score value of each and every first type of face is greater than the preset score threshold value in the current photo, and when all the expression score values of the first type of face in the current photo are greater than the preset score threshold value, the image acquisition component is controlled to stop acquiring the photo, and the synthesized photo is generated by stitching the second type of face in the acquired photos. In the present disclosure, every time when one photo is generated, it is possible to calculate only the expression score value of the face having a relatively low expression score value in the previously generated photo, whereby the number of the generated photos can be effectively reduced while ensuring the generation of the synthesized photo with a perfect effect. Meanwhile, the calculating amount of calculating the expression value of face in the photo is reduced, thereby time of generating the synthesized photo is effectively shortened, and the power consumption of generating the synthesized photo is reduced.

Moreover, by limiting the number of the generated photos, it is possible to efficiently reduce the number of photos for generating the synthesized photo while ensuring the quality of the synthesized photo.

By calculating the local score value of each face, such as an eye score value, a mouth score value, and a face orientation score value, and then weighting them to obtain the expression score value, the face expression can be determined from many aspects, and the score of the face expression can be more full-scale.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a photo synthesizing method according to an exemplary embodiment.
Fig. 2 is a flow chart of a photo synthesizing method according to a first exemplary embodiment.
Fig. 3 is a flow chart of a method for calculating an expression score value of a face according to a second exemplary embodiment.
Fig. 4 is a block diagram of a photo synthesizing device according to an exemplary embodiment.
Fig. 5 is a block diagram of another photo synthesizing device according to an exemplary embodiment.
Fig. 6 is a block diagram of still another photo synthesizing device according to an exemplary embodiment.
Fig. 7 is a block diagram suitable for a photo synthesizing device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

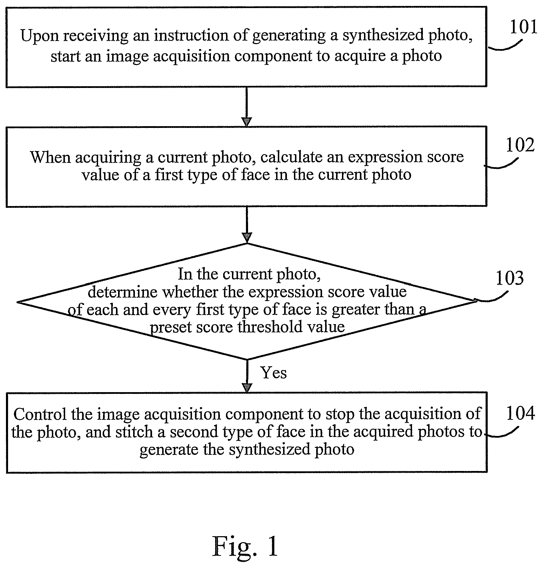

Fig. 1 is a flow chart of a photo synthesizing method according to an exemplary embodiment. The photo synthesizing method may be applied to a camera or an electronic device (such as a smart phone, and a tablet computer) including an image capturing device. As shown in Fig. 1, the photo synthesizing method includes the following steps.

In step 101, upon receiving an instruction of generating a synthesized photo, an image acquisition component is started to acquire a photo.

In an embodiment, the instruction of generating a synthesized photo may be triggered by a touch screen or a physical button.

In an embodiment, the number of photos acquired by the image acquisition component cannot exceed a preset number, such as 4. The number of the acquired photos is determined by the expression score value of the face in the photo captured at the first. For example, if the expression score values of all the faces in the first photo are greater than a preset score threshold value, it is possible to capture only one photo.

In an embodiment, the preset number may be set by the user, or may be set in advance and stored in a memory by a provider of the image capturing device.

In step 102, when acquiring a current photo, the expression score value of a first type of face in the current photo is calculated.

In an embodiment, the first type of face is used to represent a face with the expression score value, which has been calculated by the photo acquired before the current photo, not greater than a preset score threshold value. For example, if there are four faces in the photo, the four faces being Face A, Face B, Face C, and Face D respectively, when acquiring the first photo, each of Face A, Face B, Face C, and Face D may be used as the first type of face, and it is necessary to calculate the expression score values of all the faces. In the first photo, if the expression score values of Face A, Face B, and Face C are greater than a preset score threshold value, then for the second photo, the first type of face includes Face D, and when generating the second photo, it is possible to only calculate the expression score value of Face D.

In an embodiment, the expression score value of each face may be measured by eyes, mouth, face orientation, face image quality, and the like of the face.

In an embodiment, every time after generating one photo, the expression score value of the face may be calculated by using a preset image processing algorithm.

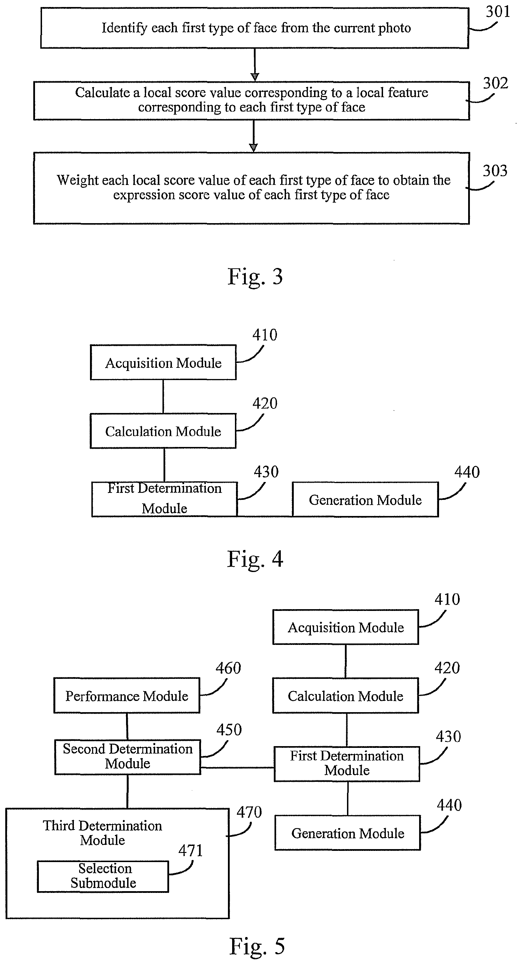

In an embodiment, the process of calculating the expression score value of the face may be referred to the embodiment shown in Fig. 3, which will not be elaborated herein.

In step 103, in the current photo, it is determined whether the expression score value of each and every first type of face is greater than the preset score threshold value, and if all the expression score values of the first type of face in the current photo are greater than the preset score threshold value, step 104 is performed.

In an embodiment, the preset score threshold value may be a reasonable score, such as 80 points, and the effect of the expression that achieves the preset score threshold value is relatively good and may be used to generate a synthesized photo.

In step 104, the image acquisition component is controlled to stop the acquisition of the photo, and the second type of face in the acquired photos is stitched to generate the synthesized photo.

In an embodiment, the second type of face is used to represent a face whose expression score value is greater than the preset score threshold value.

In an embodiment, a synthesized photo may be generated by stitching faces with the expression score values greater than the preset score threshold value in the acquired photos.

In the present embodiment, upon receiving the instruction of generating the synthesized photo, the image acquisition component is started to acquire the photo, and every time when one photo is acquired, the expression score value of the first type of face in the current photo is calculated, then it is determined whether the expression score value of each and every first type of face is greater than the preset score threshold value in the current photo, and when all the expression score values of the first type of face in the current photo are greater than the preset score threshold value, the image acquisition component is controlled to stop acquiring the photo, and the synthesized photo is generated by the acquired photo in a stitching manner. In the present disclosure, every time when one photo is generated, it is possible to calculate only the expression score value of the face having a relatively low expression score value in the previously generated photo, whereby the number of the generated photos can be effectively reduced while ensuring the generation of the synthesized photo with a perfect effect. Meanwhile, the calculating amount of calculating the expression value of face in the photo is reduced, thereby time of generating the synthesized photo is effectively shortened, and the power consumption of generating the synthesized photo is reduced.

In an embodiment, the method further includes:

if not all the expression score values of the first type of face in the current photo are greater than the preset score threshold value, determining whether the number of the acquired photos is less than a preset number; and

if the number of the acquired photos is less than the preset number, determining the first type of face needing calculation of the expression score value in a photo acquired later based on the expression score value of the first type of face in the current photo, and performing an operation of starting the image acquisition component to acquire the photo.

In an embodiment, the method further includes:
if the number of the acquired photos is not less than the preset number, determining faces for generating the synthesized photo from the acquired photos and generating the synthesized photo by a stitching manner.

In an embodiment, the determining the faces for generating the synthesized photo from the acquired photos includes:
selecting the second type of face from the acquired photos and a face having the highest expression score value among the first type of face as the faces for generating the synthesized photo.

In an embodiment, calculating the expression score value of the first type of face in the current photo includes:
identifying each first type of face from the current photo;
calculating a local score value corresponding to a local feature corresponding to each of the first type of face; and
weighting each local score value of each of the first type of face to obtain the expression score value of each of the first type of face.

For details on how to generate the synthesized photo, the following embodiments may be referred to.

In the following, the technical solutions provided by the embodiments of the present disclosure will be described with reference to specific embodiments.

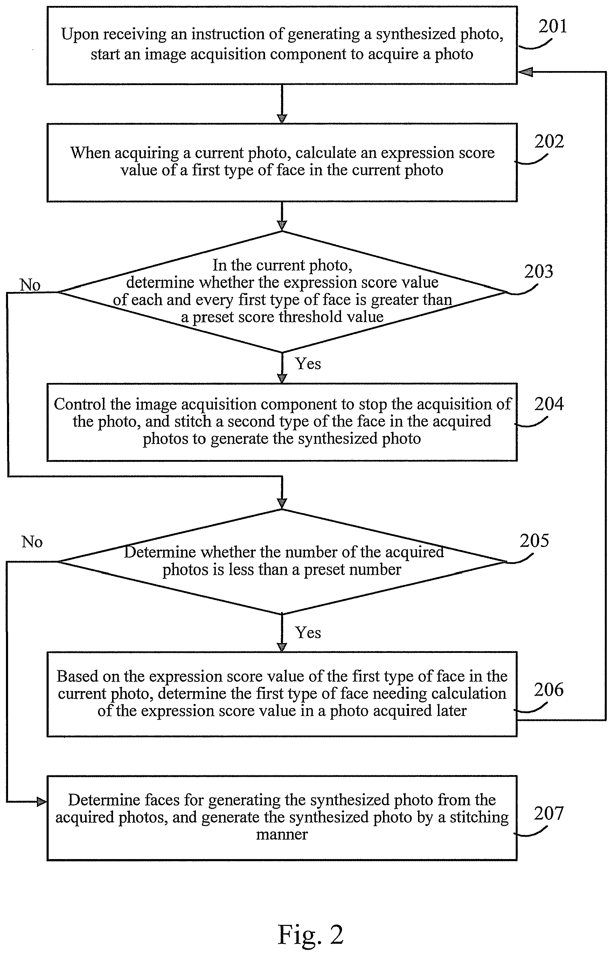

Fig. 2 is a flow chart of a photo synthesizing method according to an exemplary embodiment. In the present embodiment, the above-described method provided by the embodiments of the present disclosure is utilized, and the illustrations are given by taking the generation of a synthesized photo as an example. As shown in Fig. 2, the method includes the following steps.

In step 201, upon receiving an instruction of generating a synthesized photo, an image acquisition component is started to acquire a photo.

In step 202, when acquiring a current photo, the expression score value of a first type of face in the current photo is calculated.

In an embodiment, the first type of face is used to represent a face with an expression score value, which has been calculated by a photo acquired before the current photo, not greater than a preset score threshold value.

In an embodiment, the method of step 201 and step 202 may be referred to the description of step 101 and step 102 in the embodiment shown in Fig. 1, which will not be elaborated herein.

In step 203, in the current photo, it is determined whether the expression score value of each and every first type of face is greater than the preset score threshold value, if all the expression score values of the first type of face in the current photo are greater than the preset score threshold value, step 204 is performed, and if not all the expression score values of first type of face are greater than the preset score threshold value in the current photo, step 205 is performed.

In an embodiment, the preset score threshold value may be a reasonable score, such as 80 points. For example, if the current photo is the second captured photo and only the expression score values of Face A and Face B in the first photo are not greater than the preset score threshold value, then the expression score values of Face A and Face B in the second photo can be calculated, and it is determined whether the expression score values of Face A and Face B in the second photo are greater than the preset score threshold value.

In step 204, the image acquisition component is controlled to stop the acquisition of the photo, and the second type of face in the acquired photos is stitched to generate the synthesized photo.

In an embodiment, the second type of face is used to represent a face whose expression score value is greater than the preset score threshold value.

In step 205, it is determined whether the number of the acquired photos is less than a preset number, if the number of the acquired photos is less than the preset number, step 206 is performed, and if the number of the acquired photos is not less than the preset number, step 207 is performed.

In step 206, based on the expression score value of the first type of face in the current photo, the first type of face needing calculation of the expression score value in a photo acquired later is determined, and step 201 is performed.

For example, in an example of step 203, in the second photo, if only the expression score value of Face A is greater than the preset score threshold value, then it can be determined that in the third photo, only the expression score value of Face B needs to be calculated.

In step 207, faces for generating the synthesized photo are determined from the acquired photos, and the synthesized photo is generated by a stitching manner.

In an embodiment, it is possible to select the second type of face from the acquired photos and a face having the highest expression score value among the first type of face as the faces for generating the synthesized photo. For example, if the expression score values of Face A, Face C, and Face D in the first photo are larger than the preset score threshold value, then Face A, Face C, and Face D in the first photo are determined as the second type of face, i.e., Face A, Face C, and Face D in the first photo are faces for generating the synthesized photo. For Face B, the expression score value in the first photo is 70 points, the expression score value in the second photo is 72 points, the expression score value in the third photo is 75 points, and the expression score value in the fourth photo is 79 points. If the preset number is 4, Face B in the fourth photo may be selected as the face for generating the synthesized photo.

In this embodiment, by limiting the number of generated photos, it is possible to effectively reduce the number of photos for generating the synthesized photo in the case of ensuring the quality of the synthesized photo; furthermore, in the case where the expression score value of a face in each and every photo is not greater than the preset score threshold value, the face having the highest expression score value is determined as the face for generating the synthesized photo, thereby effectively reducing the number of photos for generating the synthesized photo in the case of ensuring the quality of the synthesized photo, effectively reducing the number of target photos, and improving the speed of generating the synthesized photo.

Fig. 3 is a flow chart of a method for calculating an expression score value of a face according to a second exemplary embodiment. In the present embodiment, the above-described method provided by the embodiments of the present disclosure is utilized, and the illustrations are given by taking the calculation of the expression score value of a face as an example. As shown in Fig. 3, the method includes the following steps.

In step 301, each first type of face is identified from the current photo.

In an embodiment, each face in each photo may be identified by an image recognition model, such as a convolution neural network.

In an embodiment, each face region may also be identified by other image processing techniques.

In step 302, a local score value corresponding to a local feature corresponding to each of the first type of face is calculated.

In an embodiment, when calculating the expression score value of the face, the local score value corresponding to each of the local feature value of the face, such as a mouth corner portion, a human eye portion, a facial clarity, and a face tilt angle, may be preferentially calculated.

In an embodiment, the local score value of the local feature value of the face may also be calculated by a pre-trained model, and in a further embodiment, the local score value of the local feature value of the face may also be calculated by a preset algorithm.

In step 303, each local score value of each of the first type of face is weighted to obtain the expression score value of each of the first type of face.

In an embodiment, the weighting coefficient corresponding to each local score value may be set by the user or may be preset by an algorithm. For example, the weighted values of the local score values corresponding to the human eye, the mouth corner, and the face tilt angle are 0.3, 0.3, and 0.4 respectively, if the corresponding weighting coefficients are 8.0, 8.3 and 8.4 respectively, then the obtained final score value is 8.0 × 0.3 + 8.3 × 0.3 + 8.4 × 0.4 = 8.25.

In the present embodiment, by calculating the local score value of each face, such as an eye score value, a mouth score value, and a face orientation score value, and then weighting them to obtain the expression score value, the face expression can be determined from many aspects, and the score of the facial expression can be more full-scale.

Fig. 4 is a block diagram of a photo synthesizing device according to an exemplary embodiment. As shown in Fig. 4, the photo synthesizing device includes: an acquisition module 410, a calculation module 420, a first determination module 430, and a generation module 440.

The acquisition module 410 is configured to start an image acquisition component to acquire a photo after receiving an instruction of generating a synthesized photo.

The calculation module 420 is configured to, when acquiring a current photo, calculate an expression score value of a first type of face in the current photo, the first type of face being used for indicating a face with the expression score value, which has been calculated by a photo acquired before the current photo, not greater than a preset score threshold value.

The first determination module 430 is configured to determine whether the expression score value of each and every first type of face calculated by the calculation module 420 is greater than the preset score threshold value in the current photo.

The generation module 440 is configured to, if the first determination module 430 determines that all the expression score values of the first type of face in the current photo are greater than the preset score threshold value, control the image acquisition component to stop acquiring the photo, and generate the synthesized photo by stitching a second type of face in the acquired photos, the second type of face being used for indicating a face with the expression score value greater than the preset score threshold value.

Fig. 5 is a block diagram of another photo synthesizing device according to an exemplary embodiment. As shown in Fig. 5, on the basis of the above embodiment shown in Fig. 4, in an embodiment, the device further includes: a second determination module 450, and a performance module 460.

The second determination module 450 is configured to, if the first determination module 430 determines that not all the expression score values of the first type of face in the current photo are greater than the preset score threshold value, determine whether the number of the acquired photos is less than a preset number.

The performance module 460 is configured to, if the second determination module 450 determines that the number of the acquired photos is less than the preset number, determine the first type of face needing calculation of the expression score value in a photo acquired later based on the expression score value of the first type of face in the current photo, and perform an operation of starting the image acquisition component to acquire the photo.

In an embodiment, the device further includes: a third determination module 470.

The third determination module 470 is configured to, if the second determination module 450 determines that the number of the acquired photos is not less than a preset number, determine faces for generating the synthesized photo from the acquired photos and generate the synthesized photo by a stitching manner.

In an embodiment, the third determination module 470 includes: a selection submodule 471.

The selection submodule 471 is configured to select the second type of face from the acquired photos and a face having the highest expression score value among the first type of face as the faces for generating the synthesized photo.

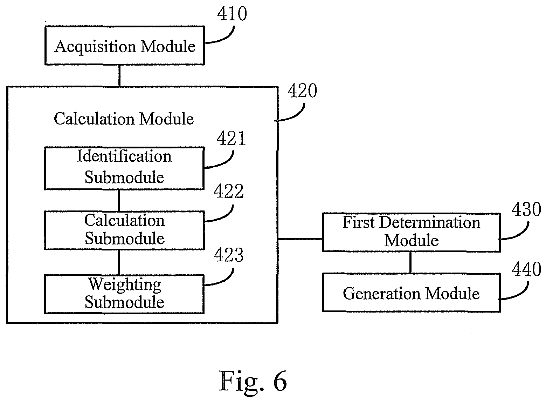

Fig. 6 is a block diagram of still another photo synthesizing device according to an exemplary embodiment. As shown in Fig. 6, on the basis of the above embodiment shown in Fig. 4 or Fig. 5, in an embodiment, the calculation module 420 includes: an identification submodule 421, a calculation submodule 422, and a weighting submodule 423.

The identification submodule 421 is configured to identify each first type of face from the current photo.

The calculation submodule 422 is configured to calculate a local score value corresponding to a local feature corresponding to each of the first type of face.

The weighting submodule 423 is configured to weight each local score value of each of the first type of face to obtain the expression score value of each of the first type of face.

The specific implementing procedure of functions and actions of individual units in the above device may refer to the implementing procedure of corresponding steps in the above methods, which will not be elaborated herein.

For device embodiments, since the device embodiments are substantially corresponding to the method embodiments, the relevant contents may be referred to some explanations in the method embodiments. The device embodiments described above are only illustrative, wherein the units illustrated as separate components may be or may not be separated physically, the component displayed as a unit may be or may not be a physical unit, i.e., may be located at one location, or may be distributed into multiple network units. A part or all of the modules may be selected to achieve the purpose of the solution in the present disclosure according to actual requirements. The person skilled in the art can understand and implement the present disclosure without paying inventive labor.

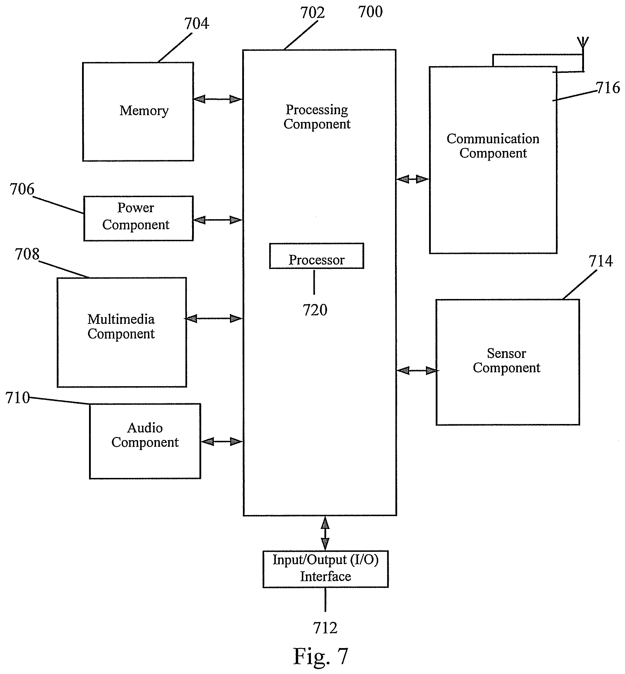

Fig. 7 is a block diagram suitable for a photo synthesizing device according to an exemplary embodiment. For example, the device 700 may be a camera or an electronic apparatus including an image capturing device.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, voice playing, data communications, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, messages, photos, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action.

The audio component 710 is configured to output and/or input audio signals. For example, the audio component 710 includes a microphone ("MIC") configured to receive an external audio signal when the device 700 is in an operation mode, such as a call mode, a recording mode, and a voice identification mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 also includes a light sensor, such as a CMOS or CCD image sensor, for use in imaging applications. In some embodiments, the sensor component 714 may also include an accelerometer sensor, a gyroscope sensor, a magnetic sensor, a distance sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the following method:
starting an image acquisition component to acquire a photo after receiving an instruction of generating a synthesized photo;
when acquiring a current photo, calculating an expression score value of a first type of face in the current photo, the first type of face being used for indicating a face with the expression score value, which has been calculated by a photo acquired before the current photo, not greater than a preset score threshold value;
determining whether the expression score value of each and every first type of face is greater than the preset score threshold value in the current photo; and
when all the expression score values of the first type of face in the current photo are greater than the preset score threshold value, controlling the image acquisition component to stop acquiring the photo, and generating the synthesized photo by stitching a second type of face in the acquired photos, the second type of face being used for indicating a face with the expression score value greater than the preset score threshold value.

In exemplary embodiments, there is also provided a non-transitory computer-readable storage medium including instructions, such as the memory 704 including instructions, the above instructions are executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

## Claims

1. A photo synthesizing method, comprising:
starting (101, 201) an image acquisition component to acquire a photo after receiving an instruction of generating a synthesized photo;
when acquiring a current photo, calculating (102, 202) an expression score value of a first type of face in the current photo, the first type of face being used for indicating a face with the expression score value, which has been calculated by a photo acquired before the current photo, not greater than a preset score threshold value;
determining (103, 203) whether the expression score value of each and every first type of face is greater than the preset score threshold value in the current photo; and
when all the expression score values of the first type of face in the current photo are greater than the preset score threshold value, controlling the image acquisition component to stop acquiring the photo, and generating the synthesized photo by stitching a second type of face in the acquired photos (104, 204), the second type of face being used for indicating a face with the expression score value greater than the preset score threshold value.

2. The method of claim 1, further comprising:
when not all the expression score values of the first type of face in the current photo are greater than the preset score threshold value, determining (205) whether the number of the acquired photos is less than a preset number; and
when the number of the acquired photos is less than the preset number, determining (206) a first type of face needing calculation of the expression score value in a photo acquired later based on the expression score value of the first type of face in the current photo, and performing an operation of starting the image acquisition component to acquire the photo.

3. The method of claim 2, further comprising:
when the number of the acquired photos is not less than a preset number, determining faces for generating the synthesized photo from the acquired photos and generating the synthesized photo by a stitching manner (207).

4. The method of claim 3, wherein the determining (207) the faces for generating the synthesized photo from the acquired photos comprises:
selecting the second type of face from the acquired photos and a face having the highest expression score value among the first type of face as the faces for generating the synthesized photo.

5. The method of claim 1, wherein the calculating (102, 202) the expression score value of the first type of face in the current photo comprises:
identifying (301) each first type of face from the current photo;
calculating (302) a local score value corresponding to a local feature corresponding to each of the first type of face; and
weighting (303) each local score value of each of the first type of face to obtain the expression score value of each of the first type of face.

6. A photo synthesizing device, comprising:
an acquisition module (410) configured to start an image acquisition component to acquire a photo after receiving an instruction of generating a synthesized photo;
a calculation module (420) configured to, when acquiring a current photo, calculate an expression score value of a first type of face in the current photo, the first type of face being used for indicating a face with the expression score value, which has been calculated by a photo acquired before the current photo, not greater than a preset score threshold value;
a first determination module (430) configured to determine whether the expression score value of each and every first type of face calculated by the calculation module (420) is greater than the preset score threshold value in the current photo; and
a generation module (440) configured to, when the first determination module (430) determines that the expression score value of the first type of face in the current photo is greater than the preset score threshold value, control the image acquisition component to stop acquiring the photo, and generate the synthesized photo by stitching a second type of face in the acquired photos, the second type of face being used for indicating a face with the expression score value greater than the preset score threshold value.

7. The device of claim 6, further comprising:
a second determination module (450) configured to, when the first determination module (430) determines that not all the expression score values of the first type of face in the current photo are greater than the preset score threshold value, determine whether the number of the acquired photos is less than a preset number; and
a performance module (460) configured to, when the second determination module (450) determines that the number of the acquired photos is less than the preset number, determine the first type of face needing calculation of the expression score value in a photo acquired later based on the expression score value of the first type of face in the current photo, and perform an operation of starting the image acquisition component to acquire the photo.

8. The device of claim 7, further comprising:
a third determination module (470) configured to, when the second determination module (450) determines that the number of the acquired photos is not less than a preset number, determine faces for generating the synthesized photo from the acquired photos and generate the synthesized photo by a stitching manner.

9. The device of claim 8, wherein the third determination module (470) comprises:
a selection submodule (471) configured to select the second type of face from the acquired photos and a face having the highest expression score value among the first type of face as the faces for generating the synthesized photo.

10. The device of claim 6, wherein the calculation module (420) comprises:
an identification submodule (421) configured to identify each first type of face from the current photo;
a calculation submodule (422) configured to calculate a local score value corresponding to a local feature corresponding to each of the first type of face; and
a weighting submodule (423) configured to weight each local score value of each of the first type of face to obtain the expression score value of each of the first type of face.

11. A photo synthesizing device, comprising:
a processor (720); and
a memory (704) for storing instructions executable by the processor (720);
wherein the processor (720) is configured to:
start (101, 201) an image acquisition component to acquire a photo after receiving an instruction of generating a synthesized photo;
when acquiring a current photo, calculate (102, 202) an expression score value of a first type of face in the current photo, the first type of face being used for indicating a face with the expression score value, which has been calculated by a photo acquired before the current photo, not greater than a preset score threshold value;
determine (103, 203) whether the expression score value of each and every first type of face is greater than the preset score threshold value in the current photo; and
when all the expression score values of the first type of face in the current photo are greater than the preset score threshold value, control the image acquisition component to stop acquiring the photo, and generate the synthesized photo by stitching a second type of face in the acquired photos (104, 204), the second type of face being used for indicating a face with the expression score value greater than the preset score threshold value.
